# EUROPEAN PATENT APPLICATION

(11) **EP 3 226 029 A1**
(43) Date of publication of application: **04.10.2017**
(21) Application number: 16163039.7
(22) Date of filing: 30.03.2016
(51) Int. Cl.: G01S 17/02, G01S 17/42, G01C 15/00, G01S 7/481

(54) **LASER SCANNER WITH REFERENCED PROJECTOR**

(71) Applicant: Hexagon Technology Center GmbH, 9435 Heerbrugg (CH)
(72) Inventor: HINDERLING, Jürg, CH-9437 Marbach (CH); SINGER, Julien, CH-9442 Berneck (CH)
(74) Representative: Gyaja, Christoph Benjamin

(57) **Abstract**

The invention relates to a laser scanner (1) for acquiring three-dimensional measuring points (M), having a body (2) mounted on a base (3), wherein the body (2) is rotatable relative to the base (3) about an azimuth axis (V) and comprises an emitting unit (4) for providing a transmission beam (T), a receiving unit (5) for detecting a reception beam (R), a directing unit (6), in particular a prism, rotatable about an elevation axis (H) configured to direct the transmission beam from the emitting unit (4) towards a scene (7), direct the reception beam from the scene (7) to the beam receiving unit (5), and a control unit. According to the invention, the scanner comprises a projector (8) as a self-contained module arranged in or on the body (2), configured to direct a light pattern (9) at the scene (7), wherein position and shape of the pattern (9) are controllable by the control unit based at least in part on projection data (P) linked to the measuring points (M) acquired with the laser scanner (1) at the scene (7).

## Description

The present invention relates to a laser scanner according to the generic term of claim 1, and to a method according to the generic term of claim 9.

Laser scanning is used to survey many different settings such as construction sites, historical buildings, industrial facilities or any other applicable setting. The laser scans achieved therewith may be used to obtain accurate three-dimensional (3D) models of a setting, wherein the models consist of a cloud of points.

Common laser scanners comprise a unit for sending out and receiving the reflected light signals in order to measure the distance of a point the signal was directed at. Usually, these scanners furthermore comprise means to rotatably alter the direction of the signals, commonly a vertical rotation axis and a horizontal rotation axis, of which one may be a slow axis and the other one may be a fast axis, wherein both axes are sensed with angle sensors.

The points of the point cloud may be achieved with distance values and solid angles, wherein the laser scanner is the origin. The distances may be calculated with the travel time measurement method by observing the time between sending out and receiving a signal. The solid angles are achieved with said angle sensors arranged at the vertical axis and at the horizontal axis.

Particularly at construction sites, designers and construction workers are more and more reliant on visual support in form of augmented reality equipment or projection means.

Such visually supporting functionalities are provided by stand-alone devices, which need to be manually aligned, positioned and/or referenced. Furthermore, merely simple screening information are provided by such devices known from prior art. Such information may be points of light or level information in form of a lines of light, each manually pointed at desired spots.

It is therefore an object of the present invention to provide an improved laser scanner with an extended field of application.

It is a further object of the invention to provide a laser scanner with an improved user-friendliness.

These objects are achieved by the realisation of the features of the independent claims. Features which further develop the invention in an alternative or advantageous manner are described in the dependent patent claims.

The laser scanner and the method according to the invention allow a user to receive relevant information, e.g. to simplify a construction workflow and increase the accuracy of construction steps. Provided is an automatic projection of visual information onto room surfaces with no manual adjustment needed from the user.

The amount, shape, and the size of information that is projected onto the scene surfaces are limited by the field of view (projection angle) of the projector. To cure this limitation, an accordingly fast rotation of the projector may be provided, which is adapted to the projection refresh rate.

Projection of the light pattern is applied by using a projector. Such projectors are known from prior art. The projector may be a conventional digital projector (beamer) with LC-filter, or a monochromatic or polychromatic laser projector. Laser projectors may realise a very compact size (also referred to as pico projectors) and allow for structured lighting of a customizable laser point matrix within a projection pyramid. The projection is sharp at any projection distance, therefore supplementary optics for adjusting the focus are not necessary. With a selection of single pixels (points) any light pattern is realisable, wherein pixel density decreases the longer the distance between projector and projection surface is. Monochromatic laser projectors provide even higher contrast than polychromatic projectors do.

Physical steering of the projector and/or a controlling of the screened pixel matrix allow for a directed positioning of a laser light pattern. With help of angle sensors the laser scanner is configured to always keep track of the position and alignment of its components.

For the purpose of a projection of a specifically situated light pattern correlated to the given geometry at a scene - that is for example the marking of a room wall at exactly this position behind which an electric cable is laid -, a laser scanner according to the invention has at least one scan (a three-dimensional point cloud) stored on itself or on a controller, and a designed model of the pattern intended to screen on the scene, wherein the designed model is manually or automatically or semi-automatically implemented into the virtual 3D-model of the scene (which is derived from the point cloud generated by the laser scanner). The implementation may e.g. be done with a personal computer, wherein the ultimately combined model (point cloud + projection data) is again stored on the laser scanner.

If the scanner meanwhile has changed its position and/or orientation - e.g. after taking it to office for the data implementation and positioning it the next day at a position differing from where the scan has taken place -, a further scan of the scene is applied by the laser scanner. In this case, two scans (point clouds) of the scene exist and these two models are now referenced to each other, for example by the matching of certain (recognised) features. By the calculated differences regarding distance and orientation between the two models, a conclusion is made where to screen the pattern which is linked to the "initial" model. That way, projection of the information may automatically be adjusted to the position of the scanner.

The projection data implemented into the initial model and to be projected with the projector at the scene may for example be objects, textual information, markings, and animations.

The scene may for example be a construction site, building facade, or a decorated room.

The scanner according to the invention has a laser projector and projects relevant data onto a previously scanned scene. The laser projector may be positioned inside the scanner in such a way that the direction of projection is orthogonal to the direction of the scanning laser. In this case, the projection is deflected by a dichroic mirror first and then by the directing unit of the scanner (e.g. a prism) to finally be projected at the scene.

The controlling of the axes components, the controlling of the measurement process, the storing of the point cloud, and the controlling of the projection may all be provided for example by at least one computer unit inside the laser scanner.

A laser scanner according to the invention may be utilised in the following exemplary workflow: In a first step, a scan of at least a part of a room scene is performed with a laser scanner according to the invention. Once the scan is completed, a three dimensional point cloud of said part of the room is created, which may be transformed into a CAD (computer aided design) model. Optionally, fitting of surfaces that are flat or of pipes may be performed in order to simplify the model.

Associated with the scan, the laser scanner may reference its position by surveying a reference object (e.g. a reference target or prism), wherein the surveying may be done by scanning with the laser, by stereoscopic referencing, or by camera imaging (according equipment provided, like e.g. two sensors or cameras may be used to detect reference points), providing that the reference object remains in a position fixed to the scene at least until the last step of the exemplary workflow is finished. Self referencing of the laser scanner may as well be realised by fitting the scanned point cloud with a stored reference point cloud or a stored 3D model.

After the surveying of the room scene, and said optional referencing step is done, the laser scanner may be moved away and abandon its position. If a reference object has been used in the referencing step, the said reference object should stay at its position.

In a second step of the exemplary workflow, information (e.g. 3D objects; position points or outlines of certain features; order and/or description of construction steps) may be imported into or added to the CAD model created from the 3D point cloud. This second step may be taken directly at the scene with help of a tablet or laptop computer, or remote from the scene in the surveyor's office at a later date. The extended CAD model is now an "augmented" model and may be saved as a new data file and transferred back to the laser scanner. In the CAD software programme, the augmented CAD model including the virtual objects or information may be previewed three-dimensionally and validated on the computer.

In a third step, the scanner is positioned back at the room scene. Where an optical accessibility of at least part of the scanned scene must be provided to the laser scanner, the exact position of the laser scanner is not crucial. If referencing as described above was performed, the laser scanner now may again reference its position in the same said manner and automatically recalculate the surveyed 3D point cloud in distance and alignment from its new standpoint. If referencing as described above was not performed (since it is optional), a point cloud comparison may be applied, by which - virtually - the scene itself is the reference object. This is done by comparing the initial point cloud to the point cloud from the further scan, and automatically detecting common features in order to determine the new coordinates of the new position of the scanner. For this, a full (in the same scope as before) scan of the scene is performed. After the point cloud has been achieved, a matching of the first and the second point cloud with regard to position and orientation may be calculated. Or in other words, the new position of the laser scanner is determined.

In a fourth step, the information added to the 3D model is processed regarding the predetermined positions on the surfaces of the room. The relative position of the scanner within the room and the parameters (coordinates) to project the information onto the surfaces within the room are computed. The adjustment calculation may be performed in the scanner or externally on a secondary computer device connected to the scanner or e.g. by sending the data to a cloud computer. An instruction set is then computed in the scanner (or calculated by the cloud computer and sent to the scanner) to define the adjusted projection for the laser projector.

In a fifth step, the information added to the 3D model is projected at their predetermined positions on the surfaces of the room. Hereby, the computed parameters and the instruction set are used. The projected information may e.g. include: drill points with or without information nearby the drill points (for example, diameter, depth etc.); level information; position and type of piping in walls; object renditions, such as object outlines, furniture, staircases, fixings etc. The projected information may as well include animations or videos showing construction steps, position of sunlight, user instructions etc.

Using the workflow described above, a complex set of information can be projected onto surfaces of a room, thereby creating an augmented reality projection of the positions of different features. The projection is automatically corrected for a differing position of the scanner.

A laser projector may be used in the form of an add-on module so that the laser projector is arranged on the laser scanner. The axis of the projector may be bi-axial or coaxial with regard to the scanning laser.

The size of the projection is limited by the projection angle of the laser projector (projection pyramid). To increase the size of the projection, the rotation of the prism may additionally be used in combination with a frequented projection in order to extend the angle of projection.

A monitoring system may be implemented to verify that construction steps have been performed correctly. For this purpose, a camera for object recognition may be used in order to verify the correct placement of objects within the room. The camera detects the projections onto the scene and checks within an algorithm if the projections match the as-built placement of e.g. drill holes, markings, etc.

The invention relates to a laser scanner for acquiring three-dimensional measuring points, the scanner having a body mounted on a base, wherein the body is rotatable relative to the base about an azimuth axis and comprises an emitting unit for providing a transmission beam, a receiving unit for detecting a reception beam, a directing unit, in particular a prism, rotatable about an elevation axis configured to direct the transmission beam from the emitting unit towards a scene, and to direct the reception beam from the scene to the beam receiving unit, and a control unit.

According to the invention, the scanner further comprises a projector as a self-contained module arranged in or on the body, configured to direct a light pattern at the scene, wherein position and shape of the pattern are controllable by the control unit based at least in part on projection data which are linked to the measuring points acquired with the laser scanner at the scene.

In one embodiment of the laser scanner, the projector is a digital projector, a monochromatic laser projector, or a polychromatic laser projector.

In an embodiment of the laser scanner, in which the projector is arranged in the body, the projector is arranged in such a way that the light pattern is deflectable by the directing unit and therewith steerable towards the scene.

In another embodiment of the laser scanner, in which the projector is arranged in the body, the projector is arranged in such a way that the light pattern is deflectable by the backside of the directing unit or by an optical deflection element arranged within the directing unit.

In one embodiment of the laser scanner, a projection axis of the projector at least in part proceeds along the axis of the transmission beam and/or the reception beam.

In an embodiment of the laser scanner, in which the projector is arranged on the body, the projector is arranged in such a way that the projector follows a rotation of the body about the azimuth axis, wherein the scanner has a first motor for the rotation of the body about the azimuth axis which first motor is controllable by the control unit based at least in part on the projection data linked to the measuring points.

In another embodiment of the laser scanner, in which the projector is arranged on the body, the projector is mounted rotatably about a projector elevation axis, wherein the scanner has a second motor for the rotation of the projector about the projector elevation axis which second motor is controllable by the control unit based at least in part on the projection data linked to the measuring points.

In an embodiment of a scanner, the projector comprises a laser source and an optical element generating a laser dot matrix as light pattern.

The invention further relates to a method for projecting a light pattern onto a scene by use of a laser scanner according to the invention as described in the present description, the method comprising:
a) performing a first three-dimensional scan of the scene,
b) generating a first cloud of measuring points from the first three-dimensional scan,
c) generating a three-dimensional model based on the first cloud of measuring points,
d) augmenting the three-dimensional model with projection data, wherein the projection data take a specific spatial relationship to the three-dimensional model, and therewith providing an augmented three-dimensional model,
e) projecting the projection data in the form of a light pattern onto the scene based at least in part on the augmented three-dimensional model.

In an embodiment of the method according to the invention, the projection data are one or more of: three-dimensional objects, textual information, markings, and animated objects.

In a further embodiment of the method, the method has, between steps d) and e), the following further steps:
d*) performing a second three-dimensional scan of the scene,
d**) generating a second cloud of measuring points from the second three-dimensional scan,
d***) referencing the first and the second cloud of measuring points, therewith calculating a difference in position and orientation regarding the first scan and the second scan.

In another embodiment of the method, projecting according to step e) is further based on the difference in position and orientation.

In an embodiment of the method, the projection data are computed to the light pattern based on the first cloud of measuring points, or based on the difference in position and orientation.

In another embodiment of the method, projecting according to step e) is performed by directing the light pattern according to a rotation of the directing unit or the projector about a horizontal axis and about a vertical axis. The horizontal axis may be the elevation axis of the scanner, or may be projector elevation axis.

In a further embodiment of the method, the light pattern is a video sequence.

In the following, the invention will be described in detail by referring to exemplary embodiments that are accompanied by figures, in which:
- Fig. 1:: shows a laser scanner according to the invention performing a three-dimensional scan of a scene;
- Fig. 2:: shows a laser scanner according to the invention getting an upload of an augmented three-dimensional model;
- Fig. 3:: shows a laser scanner according to the invention projecting a laser light pattern onto the scene dependent on the augmented three-dimensional model;
- Fig. 4:: shows a laser scanner according to the invention projecting a further laser light pattern onto the scene dependent on the augmented three-dimensional model;
- Fig. 5:: shows a laser scanner according to the invention projecting a further laser light pattern onto the scene dependent on the augmented three-dimensional model;
- Fig. 6:: shows a laser scanner according to the invention in a cross-sectional view while in a scanning mode;
- Fig. 7:: shows the laser scanner of figure 6 while in a projecting mode;
- Fig. 8:: shows a further embodiment of a laser scanner according to the invention in a cross-sectional view;
- Fig. 9:: shows a further embodiment of a laser scanner according to the invention in a cross-sectional view;
- Fig. 10:: shows a further embodiment of a laser scanner according to the invention in a cross-sectional view;

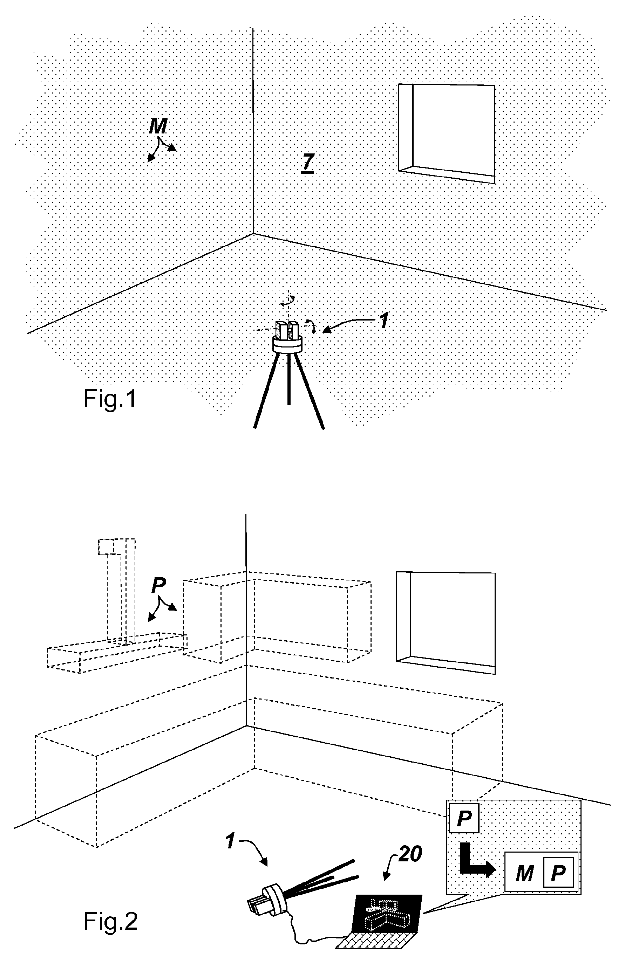

Figure 1 shows a laser scanner 1 according to the invention placed on a tripod at a room scene 7. As indicated by the arrows, the laser scanner 1 is scanning the scene as a directing unit for redirecting a measuring beam (which is sent to the scene as a transmission beam and the reflection of which is received as reception beam by the scanner) is rotating around a horizontal axis, and as a body of the laser scanner is rotating around a vertical axis. By sending out and receiving laser signals at respective positions of the components rotating around said axes, thereby applying EDM (electronic distance measurement) techniques known from prior art, such as travel time measurement, the laser scanner is "sensing" the surface of the scene and stores the scanned points M characterized by their three-dimensional coordinates. The distances detected are assigned to solid angles which are provided by according angle sensors arranged around the vertical and the horizontal axis. During the room scan, a three-dimensional point cloud is generated, out of which a CAD (computer aided design) model may be created. Such CAD model may be regenerated with means of a surface recognition algorithm so that the CAD file is simplified by having unnecessary points reduced. Said CAD model generating may take place on a computer or process unit inside the laser scanner, or e.g. on an external computer or cloud computer by using the "raw data", i.e. the point cloud.

Figure 2 shows a mobile computer 20 connected to the laser scanner 1 while the measured points M are transferred to the PC. Alternatively, merely user interface devices, such as a display, keyboard, mouse, etc., may be connected to the scanner, and the measured points M are read out, wherein all below described steps are applied on the laser scanner (for which it may comprise a computer unit). Projection data P stored, imported or created on the PC or on the scanner (with help of wirelessly connected auxiliary devices like a tablet, mouse and/or keyboard) may now be fitted into the measured point cloud or into the CAD model created out of the measured points, e.g. by an architect. In the example shown in figure 2, a kitchen unit with cupboard and exhaust hood are positioned into the geometry of the room corner. The dashed lines indicate the virtual arrangement of the 3D-model P into the room, wherein the room is defined by the formerly acquired point cloud M (see figure 1). The design model P is integrated into the room geometry M with a spatial relationship, such that every coordinate of P is "anchored" to M. After this model merge has been done, the combined model (augmented three-dimensional model) is stored on the laser scanner.

The augmented three-dimensional model, which may utilize a lot of memory, may be reduced to characteristic data so that the whole three-dimensional point cloud is not necessary to be comprised anymore. In this case, the projection data P are linked to minimal information on where to project the patterns. For example, the measuring points M may be reduced to alignment features, such as edges in the room or elements like windows.

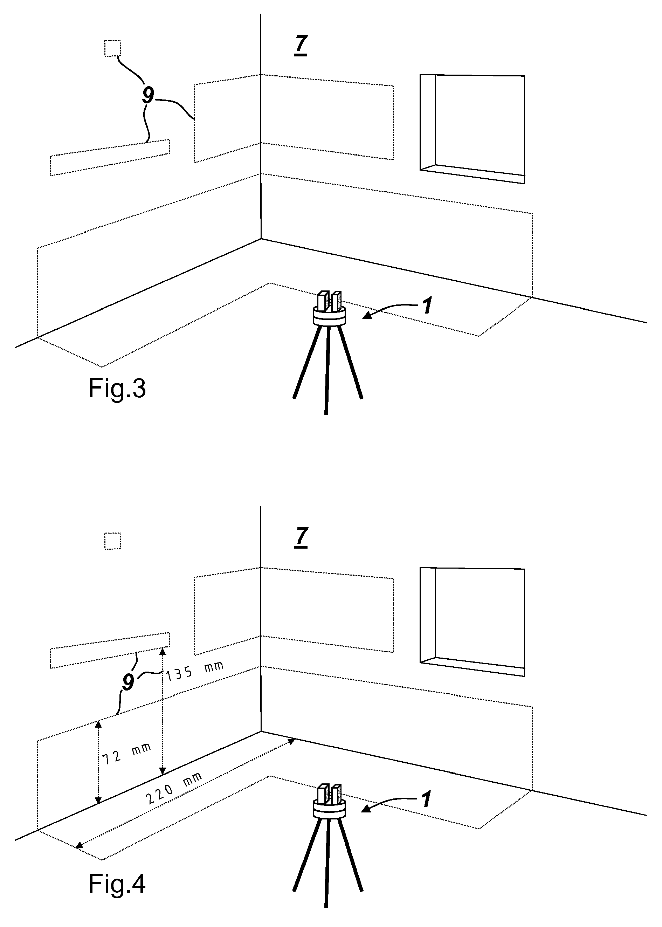

Figure 3 shows the scene from figure 1, wherein the laser scanner 1 is now erected again in the room with a random position and orientation, e.g. by a craftsman. The laser scanner 1 then can "re-orientate" itself by a self-referencing on the basis of yet another scene scan. Since the room shape has not changed, in particular since the position of objects suitable to act as reference objects (like the window in the shown example) has not changed, the laser scanner 1 may match the first and the second room point cloud and therewith determine the relative shifts and tilts. Also, position markers (e.g. stuck to the wall) may be used for referencing the old and the new position of the scanner. Now that the laser scanner 1 is "aware" of its (new) position and orientation relative to the room scene, it may also determine solid coordinates (angle position of the body and/or the directing unit) for the projection data P by way of a coordinate transformation.

A laser light pattern 9, e.g. as a result of an extraction of the projection data P, may now be projected onto the scene 7. The pattern 9 is the outline on the walls of the planned kitchen illustrated in figure 2. With this projection, it may be visualised at the real scene where a planned construction will be positioned. In figure 3 the whole outline 9 of the kitchen is shown, however,-dependent on the angle of projection of the laser projector and dependent on the position of the laser scanner relative to the surfaces of the scene - only part of the pattern may be able to screen.

As figure 4 shows, further information, such as positional, height or length declarations, may be extracted from the projection data P or may be the projection data P. These information are then projected as part of the pattern 9.

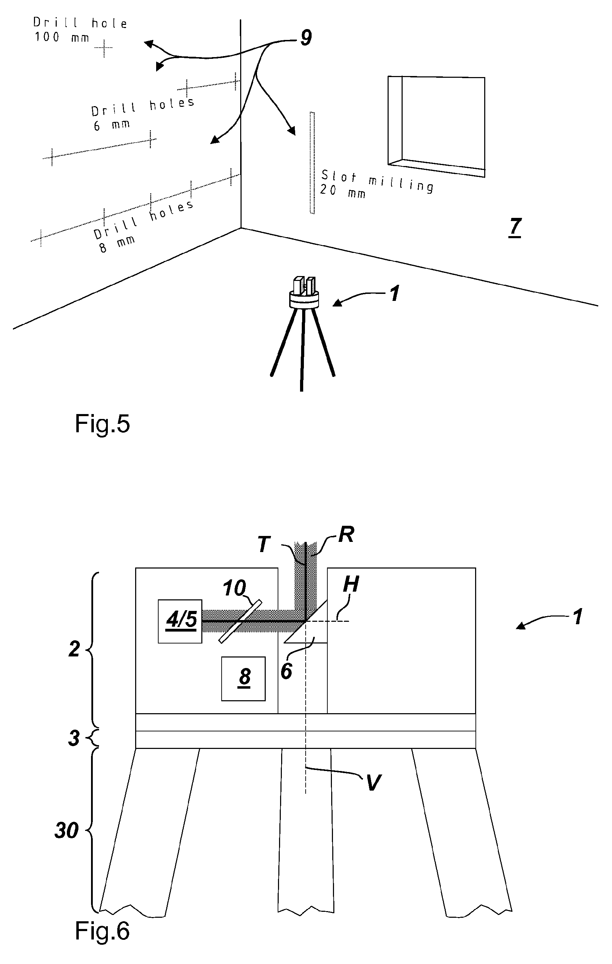

As a further example, figure 5 shows construction steps with parameters as pattern 9. With their projection on the wall, a construction worker has a visual support when accomplishing the construction steps. It is, particularly, possible to immediately perform the drills/milling at the right position, or to trace the pattern with a pencil and perform the steps at a later stage.

Figures 3, 4, and 5 are only exemplary embodiments of the pattern 9. Other projection information ("pattern") may be more detailed instruction texts, environmental parameters, tool selection, animations (moved pictures, video sequence), etc.

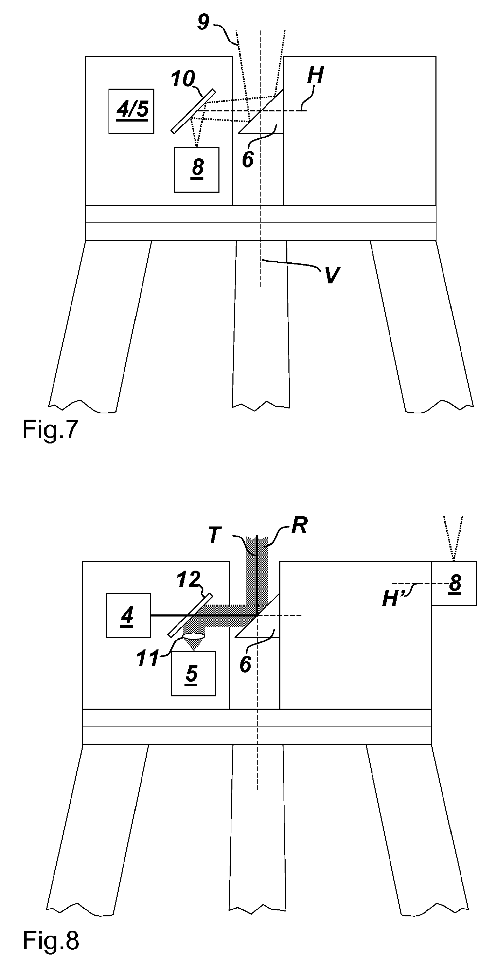

Figure 6 shows a laser scanner 1 according to the invention. The scanner comprises a body 2 and a base 3 mounted on a tripod 30. A controlled, motorised relative rotation between body 2 and base 3 is provided around axis V. The body 2 comprises an emitting unit 4, a receiving unit 5, a directing unit 6, and a projector 8, wherein emitting unit 4 and receiving unit 5 are combined as one part in this example. In the embodiment shown in figure 6, a dichroic element 10 is positioned in the beam path in order to allow to pass transmission rays T from the emitting unit 4 and reception rays R towards the receiving unit 5, and on the other hand to direct rays from the projector 8 to the directing unit 6 (this functionality will be described with figure 7). The directing unit 6 is mounted in the body so that it is rotatable around an elevation axis H by a motor, and thereby directing a transmission beam T coming from the emitting unit 4 towards the environment of the scanner, and directing a reception beam R coming from the environment back to the scanner, wherein said directing takes place in a spinning manner.

Figure 7 shows the laser scanner 1 of figure 6, wherein the directing unit 6 is fixedly positioned in a predetermined orientation to direct the pattern 9 coming from the projector 8 to a specific place. An azimutal position may be set by rotating the body relative to the base around axis V. However, in order to allow for a wider range of projection, the directing unit 6 may rotate while cooperating with the projector 8 in a clocked manner.

Besides the positionable directing unit 6, a further tractability of the pattern 9 may - to a certain extent - also be provided by the projector itself.

The translucent mirror 10 reflects essentially all light from the projector 8 towards the directing unit 6. The scanning unit (4,5) is not active while projector 8 is screening the pattern 9 towards the scene.

Figure 8 shows another embodiment of a laser scanner 1 according to the invention. Herein, the projector 8 is arranged on the body of the laser scanner 1, and the emitting unit 4 and the receiving unit 5 are separated. An optical element 11 focuses the reception beam R for the receiving unit 5. The translucent mirror 12 allows transmission beam T to pass, but reflects reception beam R towards the receiving unit 5.

In the embodiment shown in figure 8, the projector 8 is arranged on the body 2 of the laser scanner. Optionally, the projector 8 is configured to be controlled in a rotatory position about axis H'.

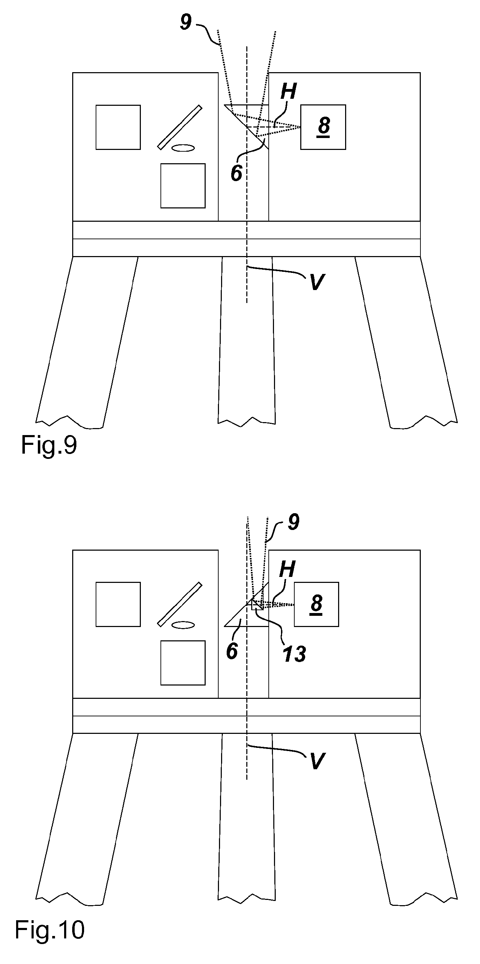

Figure 9 shows a further embodiment of a laser scanner according to the invention. In this embodiment, the laser projector 8 is arranged in the other side of the body, where the directing unit 6 is mounted. In contrast to the embodiments of the preceding figures, the projecting light now hits the directing unit 6 from the opposite side. The directing unit 6 is configured as a glass-bodied prism and the tilted surface acts as a mirror from the inside of the prism. Entry into and exit from the prism, however, is allowed for the projection light 9 through the according surfaces. For a defined projection direction, the directing unit 6 (axis H) as well as the body (axis V) may be rotatably positioned accordingly.

A further embodiment of a laser scanner according to the invention is shown in figure 10. Herein, the directing unit 6 is distinguishing from the one in figure 9 in that an optical deflection element 13 is built inside the unit 6, which directs the pattern 9 towards the scene. The tilted surface of the directing unit 6 is a continuous mirror. However, at the spot where the hollow cylinder (comprising the optical deflection element and being parallel to the axis V) hits the surface, the surface has a hole (in this case the surface is not continuous anymore), or the surface is transparent or dichroic.

That means - when the directing unit 6 is in the position shown in figure 10 and when said part of the surface is dichroic - in scanning mode, reception beam will be reflected as a whole, and in projecting mode, the light pattern 9 may pass the layer essentially without loss.

When said part of the surface of the the directing unit 6 has a hole or is transparent, in scanning mode, the reception beam will be reflected in part, which may be tolerable in some cases.

The optical deflection element 13 may be arranged so that the optical axis of the projection may at least in part be in line with (proceeds along) the axis of the transmission beam T and/or the axis of the reception beam R. Alternatively, as it is shown in figure 10, the projection may have an optical axis being off-axis relative to at least one of the axis of the transmission beam T and the axis of the reception beam R.

Although the invention is illustrated above, partly with reference to some preferred embodiments, it must be understood that numerous modifications and combinations of different features of the embodiments can be made. All of these modifications lie within the scope of the appended claims.

## Claims

1. A laser scanner (1) for acquiring three-dimensional measuring points (M), having a body (2) mounted on a base (3), wherein the body (2) is rotatable relative to the base (3) about an azimuth axis (V) and comprises
• an emitting unit (4) for providing a transmission beam (T),
• a receiving unit (5) for detecting a reception beam (R),
• a directing unit (6), in particular a prism, rotatable about an elevation axis (H) configured to
□ direct the transmission beam from the emitting unit (4) towards a scene (7),
□ direct the reception beam from the scene (7) to the beam receiving unit (5), and
• a control unit,
**characterised by**
a projector (8) as a self-contained module arranged in or on the body (2), configured to direct a light pattern (9) at the scene (7), wherein position and shape of the pattern (9) are controllable by the control unit based at least in part on projection data (P) linked to the measuring points (M) acquired with the laser scanner (1) at the scene (7).

2. A laser scanner (1) according to claim 1,
**characterised by**
the projector (8) being
• a digital projector,
• a monochromatic laser projector, or
• a polychromatic laser projector.

3. A laser scanner (1) according to claim 1 or 2, wherein the projector (8) is arranged in the body (2),
**characterised by**
the projector (8) being arranged in such a way that the light pattern (9) is deflectable by the directing unit (6) and therewith steerable towards the scene (7).

4. A laser scanner (1) according to claim 1 or 2, wherein the projector (8) is arranged in the body (2)
**characterised by**
the projector (8) being arranged in such a way that the light pattern (9) is deflectable by the backside of the directing unit (6) or by an optical deflection element (13) arranged within the directing unit.

5. A laser scanner (1) according to claim 3 or 4,
**characterised by**
a projection axis of the projector (8) at least in part proceeding along the axis of the transmission beam (T) and/or the reception beam (R).

6. A laser scanner (1) according to claim 1 or 2, wherein the projector (8) is arranged on the body (2),
**characterised by**
the projector (8) being arranged in such a way that the projector follows a rotation of the body about the azimuth axis (V), wherein the scanner has a first motor for the rotation of the body about the azimuth axis (V) which first motor is controllable by the control unit based at least in part on projection data (P) linked to the measuring points (M).

7. A laser scanner (1) according to claim 1, 2, or 6,
**characterised in that**
the projector (8) is mounted rotatably about a projector elevation axis (H'), wherein the scanner has a second motor for the rotation of the projector about the projector elevation axis (H') which second motor is controllable based at least in part on projection data (P) linked to the measuring points (M).

8. A laser scanner (1) according to any of the preceding claims,
**characterised by**
the projector (8) comprising a laser source and an optical element generating a laser dot matrix as light pattern (9).

9. A method for projecting a light pattern (9) onto a scene by use of a laser scanner (1) according to any of the preceding claims, the method comprising:
a) performing a first three-dimensional scan of the scene (7),
b) generating a first cloud of measuring points (M) from the first three-dimensional scan,
c) generating a three-dimensional model based on the first cloud of measuring points (M),
d) augmenting the three-dimensional model with projection data (P), wherein the projection data (P) take a specific spatial relationship to the three-dimensional model, and therewith providing an augmented three-dimensional model,
e) projecting the projection data (P) in the form of a light pattern (9) onto the scene based at least in part on the augmented three-dimensional model.

10. A method according to claim 9,
wherein the projection data (P) are one or more of: three-dimensional objects, textual information, markings, and animated objects.

11. A method according to claim 9 or 10,
wherein between steps d) and e), further steps are:
d*) performing a second three-dimensional scan of the scene (7),
d**) generating a second cloud of measuring points (M') from the second three-dimensional scan,
d***) referencing the first (M) and the second (M') cloud of measuring points, therewith calculating a difference in position and orientation regarding the first scan and the second scan.

12. A method according to claim 11,
wherein projecting according to step e) is further based on the difference in position and orientation.

13. A method according to any of the claims 9 to 12,
wherein the projection data (P) are computed to the light pattern (9) based on
• the first cloud of measuring points (M), or
• the difference in position and orientation.

14. A method according to any of the claims 9 to 13,
wherein projecting according to step e) is performed by directing the light pattern (9) according to a rotation of the directing unit (6) or the projector (8)
• about a horizontal axis (H,H') and
• about a vertical axis (V).

15. A method according to any of the claims 9 to 14,
wherein the light pattern (9) is a video sequence.
